# EUROPEAN PATENT SPECIFICATION

(11) **EP 1 884 648 B1**
(45) Date of publication and mention of the grant of the patent: **18.07.2012**
(21) Application number: 07106113.9
(22) Date of filing: 13.04.2007
(51) Int. Cl.: F25B 27/02, F02G 5/04, F24D 11/00, F24D 11/02

(54) **Co-generation unit and control method of the same**
Blockheizkraftwerk und Steuerverfahren dafür
Système de cogénération et son procédé de contrôle

(30) Priority: 25.07.2006 KR 20060069783
(43) Date of publication of application: 06.02.2008
(73) Proprietor: LG Electronics Inc., Seoul 150-721 (KR)
(72) Inventor: Cho, Eun Jun, 422-751, Kyunggi-do (KR); Ha, Sim Bok, 423-017, Kyungki-do (KR); Kim, Cheol Min, 641-180, Kyungsangnam-do (KR); Chang, Se Dong, 423-060, Kyungki-do (KR)
(74) Representative: Vossius & Partner

(56) References cited:
- EP-A- 1 628 096
- EP-A- 1 628 101
- DE-A1- 19 731 343
- DE-A1- 19 740 398
- JP-A- 2005 147 610
- US-A1- 2006 123 818

## Description

The present invention relates to a co-generation and the control method of the same in which waste heat of an engine is transferred to a hot-water supply heat exchanger by an antifreeze solution and so on and, more particularly, to a co-generation and the control method of the same maximizing the efficiency of hot water supply by controlling the water supply and the heat storage in accordance with the temperature of water supplied from outside, of hot water storage tank storing the water heated in the hot-water supply heat exchanger, and the temperature of the heat medium streaming into the hot-water supply heat exchanger.

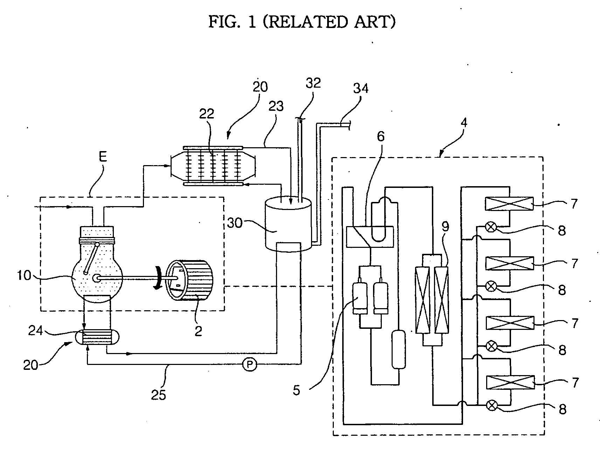

FIG. 1 is a block diagram of the co-generation according to the conventional art.

The conventional co-generation, as depicted in FIG. 1, comprises an electric generator 2 generating electricity, a drive source 10 (hereinafter referred to as "engine") such as an engine and etc generating heat as well as driving the electric generator 2, a waste heat recovery apparatus 20 recovering the waste heat generated from the engine 10, and a hot water supply tank 30 that uses the waste heat from the waste heat recovery apparatus 20.

The electric generator 2 and the engine 10 are installed in the inside of an engine room E of a chassis formed apart from the heat demand places 30.

The electricity generated at the electric generator 2 is supplied to the home appliances such as the various kinds of illuminators and the heat pump type air conditioner 4 and etc.

The heat pump type air conditioner 4 comprises a compressor 5, a 4-way valve 6, an indoor heat exchanger 7, an expanding apparatus 8, and an outdoor heat exchanger 9.

The refrigerant compressed in the compressor 5 is circulated to the compressor as passing the 4-way valve 6, the outdoor heat exchanger 9, the expanding apparatus 8, indoor heat exchanger 7 and the 4-way valve 6 in sequence when the heat pump type air conditioner 4 is in a cooling operation, therefore, the outdoor heat exchanger 9 operates as a condenser and the indoor heat exchanger 7 operates as an evaporator take the heat from indoor air.

On the other hand, as the refrigerant compressed in the compressor 5 is circulated to the compressor as passing the 4-way valve 6, the indoor heat exchanger 7, the expanding apparatus 8, outdoor heat exchanger 9, and the 4-way valve 6 in sequence when the heat pump type air conditioner 4 is in a heating operation, therefore, outdoor heat exchanger 9 operates as a evaporator and the indoor heat exchanger 7 operates as a condenser warm the indoor air.

The waste heat recovery apparatus 20 comprises an exhaust gas heat exchanger 22 taking the heat of the exhaust gas exhausted from the engine 10 and a cooling water heat exchanger 24 taking the heat of the cooling water used to cool the engine 10.

The exhaust gas heat exchanger 22 is connected with the hot water supply tank 30 and a first heat supply line 23, and the waste heat took from the exhaust gas of engine is transferred to the hot water supply tank 30 through the first heat supply line 23.

The cooling water heat exchanger 24 is connected with the hot water supply tank 30 and a second heat supply line 25, and the heat took from the cooling water used to cool the engine 10 is transferred to the hot water supply tank 30 through the second heat supply line 25.

The hot water supply is connected with the hot water supply tank 30.

The water supplied through a water supply path 32 is discharged into a water discharge path 34 after boiled in the inside of the hot water supply tank 30 as the water supply path 32 through which the water is supplied from outside and the discharge path 34 discharging the water heated in the hot water supply tank 30 are connected with the hot water supply tank 30.

The efficiency of the co-generation according to the conventional art cannot be maximized because the waste heat of the engine 10 is not used in the heat pump type air conditioner 4, but only used for supplying the hot water.

EP-A-1628096 describes a co-generation unit according to the preamble of claim 1. Further related art is described in DE-A-197 31 343 or US 2006/123818.

The present invention is contrived to overcome the above-mentioned conventional problems, and an object of the present invention is to provide a co-generation and control method of the same increasing the hot water supply efficiency by transferring the waste heat of the drive source to the cold water supplied from outside and the hot water supplied from the hot water storage tank or to one of them selectively and maximizing the hot water supply efficiency while minimizing the power consumption of the air conditioner. This object is achieved with the features of the claims.

The co-generation according to the present invention to achieve the above-mentioned object comprises a hot water supply heat exchanger heating water; a heat transfer path connected to the hot water supply heat exchanger to transfer the heat; a hot water storage tank connected with the hot water supply heat exchanger and a water circulation path; a hot water storage tank water supply apparatus supplying the water in the hot water storage tank to the water circulation path; a water supply path connected with the water circulation path; a water supply apparatus supplying water to the water supply path; and a hot water supply heat exchanger bypassing apparatus installed for the bypassing of the water supplied to the water circulation path from the hot water storage tank to the hot water supply heat exchanger.

The co-generation further comprises an electric generator; a drive source driving the electric generator; a waste heat recovery heat exchanger recovering the waste heat and connected with the heat transfer path; an air conditioner air-conditioning the indoor air; and a supplying heat exchanger installed on the refrigerant supply path of the air conditioner and connected with the heat transfer.

The air conditioner is a heat pump type air conditioner including a compressor, a 4-way valve, an outdoor heat exchanger, expanding apparatus. The heat pump type air conditioner further includes an outdoor heat exchanger bypassing apparatus for the refrigerant bypassing through the outdoor heat exchanger.

The supplying heat exchanger is installed on the refrigerant supply path between the 4-way valve and the outdoor heat exchanger.

The co-generation further comprises an exhausting heat exchanger exhausting heat to outside as installed between the hot water supply heat exchanger and the supplying heat exchanger.

The co-generation further comprises a hot water supplying/ exhausting heat exchanger bypassing apparatus for bypassing of the heat of the waste heat recovery heat exchanger through the hot water supply heat exchanger and the exhausting heat exchanger; an exhausting heat exchanger bypassing apparatus for bypassing of the heat of the waste heat recovery heat exchanger through the exhausting heat exchanger; and a supplying heat exchanger bypassing apparatus for bypassing of the heat of the waste heat recovery heat exchanger through the supplying heat exchanger.

The water supply tank is connected with the water supply path.

The hot water supply heat exchanger bypassing apparatus includes a hot water supply heat exchanger bypassing path formed at the water circulation path; and a hot water supply heat exchanger bypass valve controlling the water circulation path and the hot water supply heat exchanger.

The co-generation further comprises a hot water storage tank temperature sensor gauging the temperature of the water supplied to the water circulation path from the hot water storage tank; a hot water supply recovery entrance temperature sensor gauging the temperature of the water stream into the hot water supply heat exchanger; a hot water supply entrance temperature sensor gauging the temperature of the heat medium stream into the hot water supply heat exchanger through the heat transferring path; and a control unit controlling the water supplying apparatus, the hot water storage water supplying apparatus, and the hot water supply heat exchanger bypassing valve in accordance with the perceived temperature by the hot water storage temperature sensor, water boil recovery entrance temperature sensor, and the water boil entrance temperature sensor.

The control method of the co-generation according to the present invention drives the water supply apparatus and the hot water storage tank water supply apparatus and controls the hot water supply heat exchanger bypassing valve to be a water heat exchanger supply mode when the temperature of the hot water storage tank is the first set point more than the temperature of the water boil recovery entrance and the temperature of the water boil entrance is the second set point more than the hot water storage temperature.

The control method of the co-generation according to the present invention drives the water supplying apparatus and the hot water storage water supply apparatus and controls the hot water supply heat exchanger bypassing valve to be a hot water supply heat exchanger bypassing mode when the temperature of the hot water storage tank is the first set point more than the temperature of the water boil recovery entrance and the temperature of the water boil entrance is not the second set point more than the temperature of the hot water storage.

The control method of the co-generation according to the present invention drives the hot water storage tank water supplying apparatus as well as stops the operation of the water supply apparatus and controls the hot water supply heat exchanger bypassing valve to be a hot water supply heat exchanger supply mode when the temperature of the hot water storage tank is not the first set point more than the temperature of the water boil recovery entrance and the temperature of the water boil entrance is the second set point more than the temperature of the hot water storage tank.

The control method of the co-generation according to the present invention drives the hot water storage tank water supply apparatus as well as stops the operation of the water supply apparatus and controls the hot water supply heat exchanger bypassing valve to be a hot water supply heat exchanger bypassing mode when the temperature of the hot water storage tank is not the first set point more than the temperature of the water boil recovery entrance and the temperature of the water boil entrance is not the second set point more than the temperature of the hot water storage.

The co-generation and the control method of the same according to the present invention composed as above are advantageous that the effective water boil heat is increased as supplying the cold water supplied from the water supply and the hot water supplied from the hot water storage tank to the properly to the hot water supply heat exchanger, and heat exchange it with the heat medium such as an anti freezing solution passing through the hot water supply heat exchanger.
FIG. 1 is a block diagram of the co-generation according to the conventional art,
FIG. 2 is a block diagram illustrating the air conditioner of an embodiment of the co-generation according to the present invention operating for air-cooling and under water boil mode,
FIG. 3 is a block diagram illustrating the air conditioner of an embodiment of the co-generation according to the present invention operating for air-cooling under the not water boil mode,
FIG. 4 is a block diagram illustrating the condition that the air conditioner of an embodiment of the co-generation according to the present invention operates for air heating under the outdoor fan control mode and the water boil mode,
FIG. 5 is a block diagram illustrating the air conditioner of an embodiment of the co-generation according to the present invention operating for air heating under the low-pressure control mode and the water boil mode,
FIG. 6 is a block diagram illustrating the air conditioner of an embodiment of the co-generation according to the present invention operating for air heating under the maximum supply mode and the not water boil mode,
FIG. 7 is a magnified view of the water boil unit of an embodiment of the co-generation according to the present invention under the water supply and heat accumulation water boil mode,
FIG. 8 is a magnified view of the water boil unit of an embodiment of the co-generation according to the present invention under the water supply and water boil mode,
FIG. 9 is a magnified view of the water boil unit of an embodiment of the co-generation according to the present invention under the heat accumulation mode,
FIG. 10 is a magnified view of the water boil unit of an embodiment of the co-generation according to the present invention under the circulation mode,
FIG. 11 is a block diagram of another embodiment of the co-generation according to the present invention.

Reference will now be made in detail hereinafter as for the co-generation and the control method of the same in accordance with the present invention with reference to the accompanying drawings.

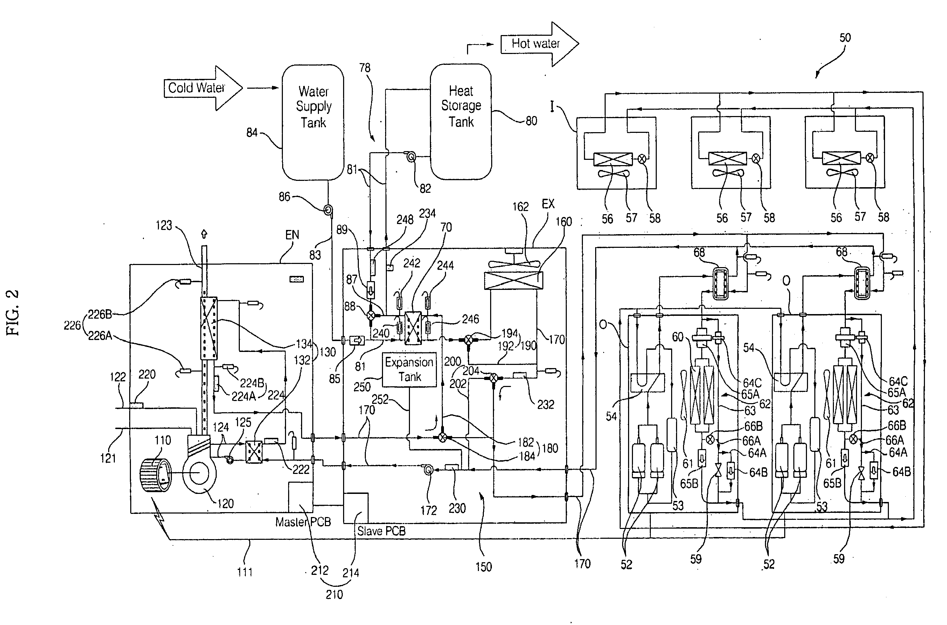

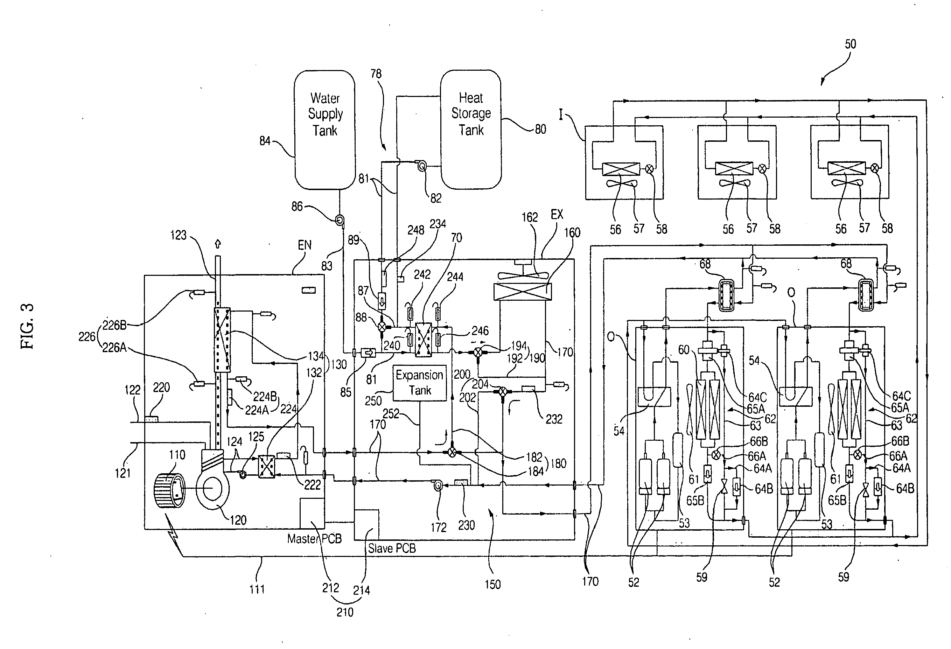

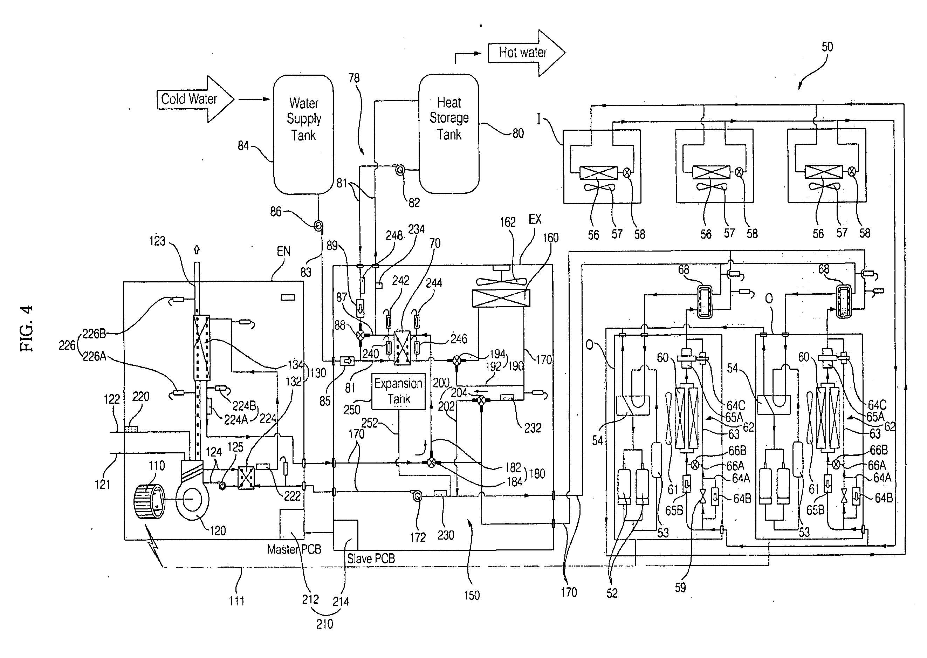

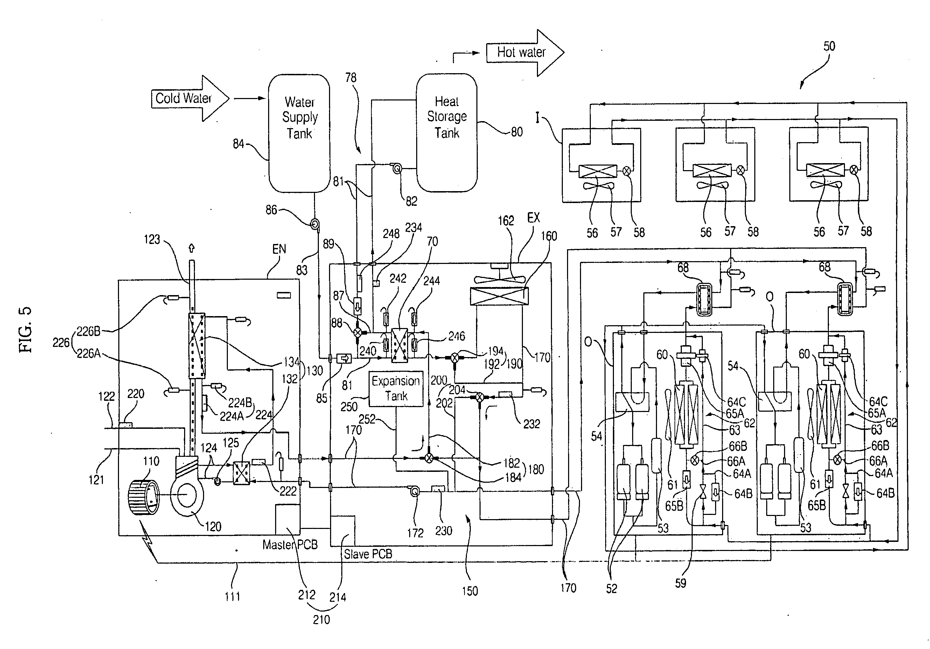

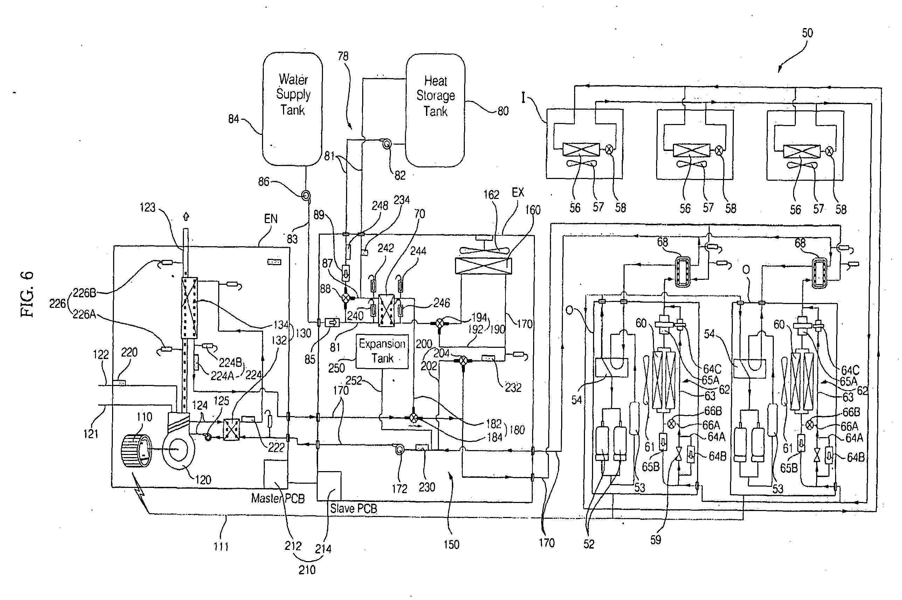

FIG. 2 is a block diagram illustrating the air conditioner of an embodiment of the co-generation according to the present invention operating for air-cooling and under water boil mode, FIG. 3 is a block diagram illustrating the air conditioner of an embodiment of the co-generation according to the present invention operating for air-cooling under the not water boil mode, FIG. 4 is a block diagram illustrating the condition that the air conditioner of an embodiment of the co-generation according to the present invention operates for air heating under the outdoor fan control mode and the water boil mode, FIG. 5 is a block diagram illustrating the air conditioner of an embodiment of the co-generation according to the present invention operating for air heating under the low-pressure control mode and the water boil mode, and FIG. 6 is a block diagram illustrating the air conditioner of an embodiment of the co-generation according to the present invention operating for air heating under the maximum supply mode and the not water boil mode.

The co-generation according to the present embodiment comprises an air conditioner 50 air-conditioning the indoor, a hot water supply heat exchanger 70 boiling water, an electric generator 110 generating electricity, a drive source 120 operating the electric generator 110 and generating heat, and a waste heat recovery heat exchanger 130 recovering the waste heat of the drive source 120 as illustrated in FIGS. 2 to 6.

It is possible for the air conditioner 50 to be composed of a heat pump type air conditioner including a compressor 52, a 4-way valve 54, an indoor heat exchanger 56, expansion apparatus 58 and 59, and an outdoor heat exchanger 60, and also possible to be composed of an exclusive air-cooling air conditioner including a compressor 52, an indoor heat exchanger 56, an expanding apparatus 58 and 59, and an outdoor heat exchanger 60, but not including the 4-way valve. The reference will now be made in detail as limited to the air conditioner composed of the heat pump type air conditioner on the following.

As the heat pump type air conditioner is composed of an outdoor machinery O and an indoor machinery I, it is possible that an indoor machinery I is connected with an outdoor machinery O, also possible that plural indoor machineries I are connected in a row with an outdoor machinery O, also possible that plural outdoor machineries O are connected in a row each other, and also possible that plural indoor machineries I are connected in a row each other.

The compressor 52, the 4-way valve 54, the indoor heat exchanger 56, the expansion apparatus 58, and the outdoor heat exchanger 60 are connected with the refrigerant laying pipe 61, a refrigerant flowing path.

An accumulator 53 in which the liquid refrigerant a part of refrigerant is accumulated is installed at the suction pipe through which the refrigerant is inhaled in the compressor 52.

The 4-way valve 54 controls the inner path for flowing the refrigerant compressed at the compressor 52 to the indoor heat exchanger 56 as illustrated in FIGS. 4 to 6 when the air heating operation of the heat pump type air conditioner 50, and controls the inner path for flowing the refrigerant compressed at the compressor 52 to the outdoor heat exchanger 60 as illustrated in FIGS. 2 and 3 when the air-cooling operation of the heat pump type air conditioner 50.

An indoor fan 57 sending indoor air to the indoor heat exchanger 56 is installed beside the indoor heat exchanger 56.

The expansion apparatus 58 and 59 are described as limited to be composed of a vessel or a linear expansion valve.

The expansion apparatus 58 and 59 include an indoor expansion valve 58 controlling each amount of the refrigerant of the each indoor machinery I as installed at the indoor machinery I, and an outdoor expansion valve 59 expanding the refrigerant while the air heating operation as installed at the outdoor machinery O.

An outdoor fan 61 sending the outdoor air to the outdoor heat exchanger 60 is installed beside the outdoor heat exchanger 60.

The compressor 52, 4-way valve 54, outdoor expansion valve 59, and the outdoor heat exchanger 60 are installed at the outdoor machinery O.

The indoor heat exchanger 56 and the indoor expansion valve 58 are installed at the indoor machinery I.

The compressor 52, indoor fan 57, and the outdoor fan 61 of the heat pump type air conditioner 50 are operated by electricity generated by the electric generator 110.

The heat pump type air conditioner 50 further includes an outdoor heat exchanger bypassing apparatus 62 for bypassing of the refrigerant through the outdoor heat exchanger 60.

The outdoor heat exchanger bypassing apparatus 62 includes an outdoor heat exchanger bypassing path 63 that an end is connected with the refrigerant path connected with the inlet of the outdoor heat exchanger 60 and the other end is connected with the refrigerant path connected with the outlet of the outdoor heat exchanger for bypassing of the refrigerant passed through the supply heat exchanger 68 described on the following while the air-cooling operation as illustrated in FIGS. 2 and 3 through the outdoor heat exchanger 60, and for bypassing of the refrigerant expanded at the indoor expansion valve 58 while the air heating operation through the outdoor heat exchanger 60 as illustrated in FIGS. 5 and 6.

The outdoor expansion valve 59 is installed at the outdoor heat exchanger bypassing path 63.

An outdoor expansion valve bypassing path 64A is formed at the outdoor heat exchanger bypassing path 63 for bypassing of the refrigerant flown into the outdoor heat exchanger bypassing path 63 through the outdoor expansion valve 59 during the air-cooling operation of the heat pump type air conditioner 50 as illustrated FIGS. 2 and 3.

A check valve 64B passing the refrigerant during the air-cooling operation and passing the refrigerant through the outdoor expansion valve 59 as blocked during the air heating operation of the heat pump type air conditioner 50 is installed at the outdoor expansion valve bypassing path 64A.

An outdoor heat exchanger bypassing path opening and shutting valve 54C opening and shutting the outdoor heat exchanger bypassing path 63 is installed at the outdoor heat exchanger bypassing path 63.

The outdoor heat exchanger bypassing apparatus 62 includes the outdoor heat exchanger opening and shutting valve 65A installed at the refrigerant path connected with the outlet of the outdoor heat exchanger 60 during the air heating operation.

The outdoor heat exchanger bypassing apparatus 62 further includes a connection path 66A connecting the refrigerant path connected with the inlet of the outdoor heat exchanger 60 and the outdoor heat exchanger bypassing path 63 during the air heating operation, and a connection path opening and shutting valve 66B opening and shutting the connection path 66A.

A check valve 65B preventing the streaming of the refrigerant into the outdoor heat exchanger 60 without passing through the outdoor expansion valve 59 during the air heating operation of the heat pump type air conditioner is installed at the refrigerant path connected with the inlet of the outdoor heat exchanger 60 of the outdoor heat exchanger bypassing apparatus 62.

Here, the outdoor heat exchanger bypassing apparatus 62, as illustrated in FIGS. 2 and 3, opens the outdoor heat exchanger bypassing path opening and shutting valve 64C as well as shutting the outdoor heat exchanger opening and shutting valve 65A during the air-cooling operation, shutting the connection path opening and shutting valve 66B, and the refrigerant bypasses the outdoor expansion valve 59 as well as by passing the outdoor heat exchanger 60.

The outdoor heat exchanger bypassing apparatus 62, as illustrated in FIG. 4, shuts the outdoor heat exchanger bypassing path opening and shutting valve 64C as well as opening the outdoor heat exchanger opening and shutting valve 65A during the outdoor fan control air heating operation, opening the connection path opening and shutting valve 66B, and the refrigerant passes through the outdoor heat exchanger 60 after passing through the outdoor expansion valve 59.

The outdoor heat exchanger bypassing apparatus 62, as illustrated FIGS. 5 and 6, opening the outdoor heat exchanger bypassing path opening and shutting valve 64C as well as shutting the outdoor heat exchanger opening and shutting valve 65A during the lo-pressure control air heating operation and maximum supply air heating operation, shutting the connection path opening and shutting valve 66B, and the refrigerant bypasses the outdoor heat exchanger 60 after passing through the outdoor expansion valve 59.

Meanwhile, the co-generation further comprises a supply heat exchanger 68 installed on the refrigerant path of the heat pump type air conditioner 50 for transferring the waste heat recovered from the waste heat recovery heat exchanger 130 as a refrigerant of the heat pump type air conditioner 50, and transferring the heat transferred from the refrigerant of the heat pump type air conditioner 50 to the hot water supply heat exchanger 70 if necessary.

The supply heat exchanger 69 is installed on the refrigerant path between the 4-way valve 54 and the outdoor heat exchanger 60.

That is, the supply heat exchanger 68 may be operated as a condenser condensing the refrigerant during the air-cooling operation of the heat pump type air conditioner 50, and also may be operated as a evaporator evaporating the refrigerant during the air heating operation of the heat pump type air conditioner 50.

A water boil unit 78 boiling cold water or hot water as supplying to the hot water supply heat exchanger 70 is connected with the hot water supply heat exchanger 70.

The water boil unit 78 includes a hot water storage tank 80 accommodating water, and a water circulation path 81 connecting the hot water storage tank 80 and the hot water supply heat exchanger 70.

The hot water storage tank 80 is a kind of heat store tank storing the heat recovered from the hot water supply heat exchanger 70, and the water circulation path 81 is formed as the water of the hot water storage tank 80 is circulated through the inside of the hot water storage tank 80 after supplied to the hot water supply heat exchanger and passed through the hot water supply heat exchanger 70.

A hot water storage tank water supply apparatus 82 supplying the water in the inside of the hot water storage tank 80 to the water circulation path 82 is installed at the water circulation path 82.

The hot water storage tank water supply apparatus 82 is composed of a hot water storage tank pump installed at the water circulation path 81 for pumping the water in the hot water storage tank 80 to be circulated to the hot water storage tank 80 after passing through the hot water supply heat exchanger 70.

On the other hand, a water supply path 83 supplying outside water to the water circulation path 82 is connected with the water circulation path 81.

The water supply path 83 is capable of supplying water from the water supply service to the water circulation path 81 as directly connected with the water supply service and also capable of supplying water from the water supply tank 84 to the water circulation path 81 as connected with a separate water supply tank 84, and the water supply path 83 will now be described as limited to the water supply path 83 connected with the water supply tank 84 on the following.

A check valve 85 preventing flowing backward of water in the water circulation path 81 through the water supply path 83 and a water supply apparatus 86 pumping water in the water supply tank 84 to the water supply path 83 are installed at the water supply path 83.

The water supply apparatus 86 is composed of a water supply pump installed at the water supply path 83, especially between the water supply tank 84 and the check valve 85.

A hot water supply heat exchanger bypassing apparatus for bypassing of the water supplied to the water circulation path 81 from the hot water storage tank 80 through the hot water supply heat exchanger 130 is installed at the water circulation path 81.

The hot water supply heat exchanger bypassing apparatus includes a hot water supply heat exchanger bypassing path 87 formed at the water circulation path 81; and a hot water supply heat exchanger bypassing valve 88 controlling the water circulation path 81 and the hot water supply heat exchanger bypassing path 87.

The hot water supply heat exchanger bypassing valve 88 decides the bypassing of the hot water supply heat exchanger of the water supplied from the hot water storage tank 80 as installed at the diverging part of the water circulation path 87 and the hot water supply heat exchanger bypassing path 87.

The hot water supply heat exchanger bypassing valve 88 has a hot water supply heat exchanger bypassing mode bypassing the water supplied from the hot water storage tank 80 through the hot water supply heat exchanger 70 during the water supplying and boil mode and the circulation mode described on the following, and has a hot water supply heat exchanger supply mode bypassing the water supplied from the hot water storage tank 80 through the hot water supply heat exchanger 70 during the water supplying and heat storing water boil mode and the heat storing mode described on the following.

On the other hand, a check valve 89 is installed between the hot water storage tank pump 82 and hot water supply heat exchanger bypassing valve 88 at the water circulation path 81.

The electric generator 110 supplying electricity to electronic machinery such as heat pump type air conditioner 50 or various illuminations and etc generates electricity when the output shaft is rotated as a rotor, as an alternator or a direct current generator, is connected with the output shaft of the drive source 120.

The electric generator 110 supplies generated electricity through the power line 111 as connected with the heat pump type air conditioner 50 and etc by power line 111.

The drive source 120 is composed of a fuel cell or an engine operated as using gas, petroleum, or fossil fuel, and it is described as limited to the engine on the following.

A fuel inlet 121 into which the fuel such as gas, petroleum and etc are poured, an inlet 122 through which the air is inhaled from outside to the engine 120, and an exhaust pipe 123 through which the waste gas exhausted from the engine 120 passes are installed at the engine 120.

The waste heat recovery heat exchanger 130 is composed of a coolant heat exchanger 132 recovering the coolant heat of the engine as connected with the engine through the coolant line 124, and a exhaust gas heat exchanger 134 installed on the exhaust pipe 123 to recover the waste gas heat exhausted from the engine 120.

A coolant circulation pump 125 circulating the coolant through the engine 120 and the coolant heat exchanger 132 is installed at the engine 120 or the coolant line 124.

The electric generator 110, engine 120, and the waste heat recovery heat exchanger 130 are installed at the engine unit EN.

The co-generation comprises a heat transferring apparatus 150 transferring the heat of the heat of the exhaust gas exchanger 130 to the heat demand places such as the hot water supply heat exchanger 70, the air conditioner and etc.

Here, the heat transferring apparatus 150 may transfer the heat of the waste heat recovery heat exchanger only to the hot water supply heat exchanger 70 and the heat pump type air conditioner 50, may transfer the heat of the heat of the waste heat recovery heat exchanger 130 to the hot water supply heat exchanger 70 and the heat pump type air conditioner 50, and may transfer the heat of the heat pump type air conditioner 50 to the hot water supply heat exchanger if necessary.

As the hot water supply efficiency of the heat transferring apparatus 150 is maximized when the heat of the refrigerant is transferred to the hot water supply heat exchanger 70 during the air-cooling operation of the heat pump type air conditioner 50, the heat transferring apparatus 150 is described as limited that the heat of the waste heat recovery heat exchanger 130 is transferred to the hot water supply heat exchanger 70 and the heat pump type air conditioner 50, and the heat of the heat pump type air conditioner 50 is transferred to the hot water supply heat exchanger 70, if necessary.

The heat transferring apparatus 150 includes a heat transfer path 170 connecting the heat of the waste heat recovery heat exchanger 130, hot water supply heat exchanger 70, radiant heat exchanger 160, and the supply heat exchanger 68.

Here, as the radiant heat exchanger 160 exhausts the entire of a portion of the heat recovered from the waste heat recovery heat exchanger 130 to outside if necessary, a radiant heat fan 162 sending the outside air to the radiant heat exchanger 160 is installed beside the radiant heat exchanger 160.

A heat medium circulation pump 172 circulating the heat medium such as an anti freezing solution (hereinsfter referred to as "heat medium") through the waste heat recovery heat exchanger 130, water heat exchanger 70, radiant heat exchanger 160, and the supply heat exchanger 68 is installed at the heat transfer path 170.

As the heat transfer apparatus 150 transfers the heat recovered from the engine 120 the most suitably in accordance with the water boil, air-cooling/ air warming, and the condition of the outdoor temperature when the heat recovered from the engine, the heat medium passed through the waste heat recovery heat exchanger 130, bypasses at least one of the hot water supply heat exchanger 70, radiant heat exchanger 160, and the supply heat exchanger 68, it is described as limited that the heat medium passed through the waste heat recovery heat exchanger 130 bypasses through each of the heat exchanger 70, 160, and 68 on the following.

The heat transfer apparatus 150 further includes the hot water supply/ radiant heat exchanger bypassing apparatus 180 formed for bypassing of the heat of the waste heat recovery heat exchanger 130 through the hot water supply heat exchanger and the radiant heat exchanger.

The water boil/ radiant heat exchanger bypassing apparatus 180 includes a water boil/ radiant heat exchanger bypassing path 182 formed at the heat transfer path 170; and a water boil/ radiant heat exchanger bypassing valve 184 installed at the diverging point of the water boil/ radiant heat exchanger bypassing path 182 and the heat transfer path 170.

The heat transfer apparatus 150 further includes a radiant heat exchanger bypassing apparatus 190 bypassing the heat of the waste heat recovery heat exchanger 130 through the radiant heat exchanger 160.

The radiant heat exchanger bypassing apparatus 190 includes a radiant heat exchanger bypassing path 192 formed at the heat transfer path 170; and a radiant heat exchanger bypassing valve 194 installed at the diverging point of the radiant heat exchanger bypassing path 192 and the heat transfer path 170.

The heat transfer apparatus 150 further includes a supply heat exchanger bypassing apparatus 200 bypassing the heat of the waste heat recovery heat exchanger 130 through the supply heat exchanger 68.

The supply heat exchanger bypassing apparatus 200 includes a supply heat exchanger bypassing path 202 formed at the heat transfer path 170; and a supply heat exchanger bypassing valve 204 installed at the diverging point of the supply heat exchanger bypassing path 202 and the heat transfer path 170.

Both of the hot water supply heat exchanger 70 and the radiant heat exchanger 160 are installed at the radiant unit EX of the co-generation.

All of the water boil/ radiant heat exchanger bypassing path 182, the water boil/ radiant heat exchanger bypassing valve 184, the radiant heat exchanger bypassing path 192, the radiant heat exchanger bypassing valve 194, the supply heat exchanger bypassing path 202, and the supply heat exchanger bypassing valve 204 are installed at the radiant heat unit EX of the co-generation.

The co-generation further comprises a control unit 210 controlling the water boil/ radiant heat exchanger bypassing valve 184, the radiant heat exchanger bypassing valve 194, the supply heat exchanger bypassing valve 204, the outdoor heat exchanger opening and shutting valve 65A, the outdoor heat exchanger bypassing path opening and shutting valve 64C, and the connection path opening and shutting valve 66B in accordance with the air-cooling/ air warming and water boiling of the heat pump type air conditioner 50.

The control unit 210 is composed of a master PCB 212 installed at the engine unit EN, and a slave PBC 214 installed at the radiant heat unit EX and connected with the master PBC 212 by a control line.

The various kinds of sensors perceiving the temperature or the flux are installed at the co-generation.

The co-generation comprises an intake port temperature sensor 220 composed of a thermistor perceiving the temperature of outside air inhaled into the intake port 12, a coolant heat exchanger outlet temperature sensor 222 composed of a thermistor perceiving the temperature of the outlet of the coolant heat exchanger 132 of the heat transfer path 170, a waste gas heat exchanger outlet temperature sensor 224 composed of a thermistor 224A and RTD sensor 224B perceiving the temperature of the outlet of the waste gas heat exchanger 134 of the heat transfer path 170, and an exhaust pipe temperature sensor 226 composed of RTD sensors 226A, 226B perceiving the each temperature of front and rear of the waste gas heat exchanger 134 of the exhaust pipe 123.

The intake port temperature sensor 220, the coolant heat exchanger outlet temperature sensor 222, the waste gas heat exchanger outlet temperature sensor 224, and the exhaust pipe temperature sensor 226 are installed at the inside of the engine unit EN.

The co-generation comprises the No. 1 transfer path temperature sensor 230 perceiving the before temperature of the heat medium circulation pump 172 of the heat transfer path 170 and the No. 2 heat transfer path temperature sensor 232 perceiving the temperature between the radiant heat exchanger bypassing path 192 and the radiant heat exchanger bypassing valve 204 of the heat transfer path 170.

The No. 1 heat transfer path temperature sensor 230 and the No. 2 heat transfer path temperature sensor 232 are installed at the radiant heat unit EX.

The radiant heat unit EX is connected with the tank connection path 252 that an expansion tank 250 is connected between the heat medium circulation pump 172 and the supply heat exchanger bypassing path 202 of the heat transfer path 170.

Reference will now be made in detail as for the operation of the present invention configured as above.

First, when the engine 120 is operated, the electric generator 110 generates electricity as the rotor is rotated, and the generated electricity is supplied to the heat pump type air conditioner 50 through the power line 111 as illustrated in FIGS. 2 to 5.

The exhaust gas heat and the coolant heat of the engine are recovered at the waste heat recovery heat exchanger 130, the coolant heat exchanger 132 and the exhaust gas heat exchanger 134 during the operation of the engine 120.

The co-generation controls the bypassing of the refrigerant through the outdoor heat exchanger 60 as well as operating the heat pump type air conditioner 50 to be an air-cooling mode when the heat pump type air-conditioner 50 is required of air-cooling and water boiling, and controls the heat medium of the heat transfer path 170 to be circulated through the waste heat recovery heat exchanger 130, hot water supply heat exchanger 70, and the supply heat exchanger 68.

The heat pump type air conditioner 50 controls the 4-way valve 54 to be an air-cooling mode as well as operating the compressor 52, opens the outdoor heat exchanger bypassing path opening and shutting valve 64C as well as shutting the outdoor heat exchanger opening and shutting valve 65A, and shuts the connection path opening and shutting valve 66B.

As describing the flowing of the refrigerant of the heat pump type air conditioner 50, the high temperature and high pressure refrigerant compressed at the compressor 52 is supplied to the supply heat exchanger 68 as passing through the 4-way valve 54, condensed as taken the heat away from the supply heat exchanger 68 when it passes through the supply heat exchanger 68, and bypasses the outdoor heat exchanger 60 after that.

The refrigerant bypassed the outdoor heat exchanger 60 is evaporated as transferred to the indoor heat exchanger 56 after transferred to the indoor machinery I and expanded at the indoor expansion valve 58, and after that, circulated to the compressor 52 through the 4-way valve 54 as transferred to the outdoor machinery O.

That is, the refrigerant of the heat pump type air conditioner is condensed at the supply heat exchanger 68, and cooling the indoor air as evaporated at the indoor heat exchanger 56.

On the other hand, the control unit 210 controls the water boil/radiant heat exchanger bypassing valve 184 to be the water boil/ radiant heat supply mode as well as operating the heat medium circulation pump 172 for circulation of the heat medium of the heat transfer path 170 through the waste heat recovery heat exchanger 130, hot water supply heat exchanger 70, and the supply heat exchanger 68, and controls the supply heat exchanger bypassing valve 204 to be the supply heat exchanger mode.

At this time, as the control unit 210 controls the radiant heat exchanger bypassing valve 194 in accordance with the temperature of the heat medium, it controls the radiant heat exchanger bypassing valve 194 to be the radiant heat exchanger supply mode and when the temperature of the heat medium is over the set point, and it controls the radiant heat exchanger bypassing valve 194 to be the bypassing mode when the temperature of the heat medium is not more than the set point.

As describing the flow of the heat medium in the heat transfer path 170, the heat medium in the heat transfer path 170 is heated as receiving the heat while passing through the waste heat recovery heat exchanger 130 during the operation of the heat medium circulation pump 172, as illustrated in FIG. 2, and it streams into the water heat exchanger 70 as passing through the water boil/ radiant heat exchanger 130.

The heat medium flown into the hot water supply heat exchanger 70 heats the hot water supply heat exchanger 70 as transferring the heat to the water boil exchanger 70, and after that, it passes through or bypasses the radiant heat exchanger 160in accordance with the temperature condition of the system.

The heat medium passed through or by passed the radiant heat exchanger 160 is supplied as a supply heat exchanger 68 after passing through the supply heat exchanger bypassing valve 204, the temperature of it is raised by receiving heat from the high temperature and high pressure refrigerant gas passing through the supply heat exchanger 68, and it is circulated to the waste heat recovery heat exchanger 130.

That is, the water boiling capacity of the hot water supply heat exchanger 70 of the co-generation is improved as the refrigerant of the heat pump type air conditioner 50 is condensed as the heat is taken away from the heat medium while passing through the supply heat exchanger, and as the heat of the waste heat recovery heat exchanger 130 and the heat of the supply heat exchanger 68 are transferred to the hot water supply heat exchanger through the heat transfer path 170.

In the co-generation, the lower the temperature of the water supplied to the hot water supply heat exchanger 70 from the water boiling unit 78, the larger the amount of the heat transference of the hot water supply heat exchanger 70, and the heat medium passed through the hot water supply heat exchanger 70 recovers a lot of heat from the refrigerant while passing through the supply heat exchanger 68, and the consumption electricity of the compressor is reduced compared with the same air-cooling capacity of the heat pump type air conditioner 50.

The co-generation controls the refrigerant no to pass through the outdoor heat exchanger 60 as well as operating the heat pump type air conditioner 50 to be air-cooling mode when the heat pump type air-conditioner is under the air-cooling mode without request of water boiling as illustrated in FIG 3, and controls that the heat medium in the heat transfer path 170 is circulated through the exhaust gas heat exchanger 130 and supply heat exchanger 68.

The heat pump type air conditioner 50 controls the 4-way valve 54 to be the air-cooling mode as well as operating the compressor 52, opens the outdoor heat exchanger bypassing path opening and shutting valve 64C as well as shutting the outdoor heat exchanger opening and shutting valve 65A, and shuts the connection path opening and shutting valve.

The co-generation operates the heat medium circulation pump 172 for controlling the heat medium in the heat transfer path 170 to be circulated through the waste heat recovery heat exchanger 130 and the supply heat exchanger 68, controls the water boil/ radiant heat exchanger bypassing valve 184 to be the water boil/ radiant heat exchanger supply mode, controls the radiant heat exchanger bypassing valve 194 to be the radiant heat exchanger supply mode, and controls the supply heat exchanger bypassing valve 204 to be the supply heat exchanger supply mode.

As describing the flowing of the refrigerant of the heat pump type air conditioner 50, the high-temperature and high-pressure refrigerant compressed at the compressor 52 is supplied to the supply heat exchanger passed through the 4-way valve 54 and condensed as the heat is taken away from the supply heat exchanger while passing the supply heat exchanger 68, and bypasses the outdoor heat exchanger 60.

The refrigerant bypassed the outdoor heat exchanger 60 is evaporated in the indoor heat exchanger 56 after expanded in the expansion valve 58 after transferred to the indoor machine I, and after that, transferred to the outdoor machine O and circulated to the compressor through the 4-way valve 54.

That is, the refrigerant of the heat pump type air conditioner 50 is condensed at the supply heat exchanger 68 and cools the indoor air as evaporated in the indoor heat exchanger 56.

As describing the flowing of heat medium of the heat transfer path 170, illustrated In FIG. 3, the heat medium in the heat transfer path 170 is boiled as receiving heat while passing through the waste heat recovery heat exchanger 130 during the operation of the heat medium circulation pump 172, streams into the hot water supply heat exchanger 70 as passing through the water boil/ radiant heat exchanger bypassing valve 184, streams into the radiant heat exchanger 192 after passing through the hot water supply heat exchanger 70, and radiates heat to outside as passing through the radiant heat exchanger 192.

The heat medium radiated is supplied to the supply heat exchanger 68 after passing through the supply heat exchanger bypassing valve 204, the temperature of it gets higher as receiving heat from the high-temperature and high-pressure refrigerant gas passing through the supply heat exchanger 68, and then, circulated to the exhaust gas heat exchanger 130.

That is, the water boiling capacity of the hot water supply heat exchanger 70 of the co-generation is improved as the refrigerant of the heat pump type air conditioner 50 is condensed as the heat of it is taken away from the heat medium while passing through the supply heat exchanger 68, and as the heat of the waste heat recovery heat exchanger 130 and the heat of the supply heat exchanger 68 are transferred to the hot water supply heat exchanger 70 through the heat transfer path 170.

When the heat pump type air conditioner 50 is under the air warming mode without water boiling request, as illustrated in FIG. 4, the co-generation passes the refrigerant through the outdoor heat exchanger 60 as well as operating the heat pump type air-conditioner 50 to be air warming mode, and controls the heat medium in the heat transfer path 170 to be circulated through the waste heat recovery heat exchanger 130 and water heat exchanger 70 or, as illustrated in FIG 5, controls the refrigerant not to be circulated through the outdoor heat exchanger 60 as well as operating the heat pump type air conditioner 50 to be the air warming mode, and controls the heat medium in the heat transfer path 170 to be circulated through the waste heat recovery heat exchanger 130, hot water supply heat exchanger 70, and the supply heat exchanger 68.

It is desirable for the co-generation, as illustrated in FIG 4, to maximize the capacity of heat recovering to the hot water supply heat exchanger 70 and the capacity of water boiling as controlling the refrigerant to pass through the outdoor heat exchanger 60 and the heat medium in the heat transfer path 170 to be circulated through the waste heat recovery heat exchanger 130 and the water heat exchanger 70 when the outdoor temperature is not cold enough for the outdoor heat exchanger not frosted over, and it is desirable for the co-generation, as illustrated in FIG 5, to prevent deterioration of the water boiling capacity may be generated when the outdoor heat exchanger 60 is frosted over as stopping the passing of refrigerant through the outdoor heat exchanger 60 and controlling the heat medium in the heat transfer path 170 to be circulated through the waste heat recovery heat exchanger 130, hot water supply heat exchanger 70, and the supply heat exchanger 68.

Reference will now be made in detail to the case passing the refrigerant to the outdoor heat exchanger 60 as well as operating the heat pump type air conditioner 50 to be the air warming mode controlling the heat medium in the heat transfer path 170 to be circulated through the waste heat recovery heat exchanger 130 and the hot water supply heat exchanger 70, as illustrated in fig. 4.

The heat pump type air conditioner 50 controls the 4-way valve to be the air-warming mode as well as operating the compressor 52, shuts the outdoor heat exchanger bypassing path opening and shutting valve 65C as well as opening the outdoor heat exchanger opening and shutting valve 65A, and opens the connection path opening and shutting valve 66B.

As, describing the flowing of refrigerant in the heat pump type air conditioner 50, the high-temperature and high-pressure refrigerant compressed at the compressor 52 passes through the 4-way valve 54 and transferred to the indoor machine I, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and streams into the outdoor heat exchanger 60.

The refrigerant flown into the outdoor heat exchanger 60 evaporated while passing through the outdoor heat exchanger 60, passes through the supply heat exchanger 68 without heat exchanging, and circulated to the compressor 52 after passing through the 4-way valve 54.

That is, the refrigerant in the heat pump type air conditioner warms indoor as condensed at the indoor heat exchanger 56 and evaporated at the outdoor heat exchanger 60.

The control unit 210 controls the water boil/ radiant heat exchanger bypassing valve 184 to be the water boil/ radiant heat exchanger supply mode as well as operating the heat medium circulation pump 172 to circulate the heat medium in the heat transfer path 170 through the waste heat recovery heat exchanger 130 and the hot water supply heat exchanger 70, and controls the supply heat exchanger bypassing valve 204 to be the supply heat exchanger bypassing mode.

As the control unit 210 controls the radiant heat exchanger bypassing valve 194 in accordance with the temperature, it controls the radiant heat exchanger bypassing valve 194 to be the radiant heat exchanger supply mode when the temperature of the heat medium is over the set point, and controls the radiant heat exchanger bypassing valve 194 to be the bypassing mode when the temperature is not more than the set point.

As describing the flowing of the heat medium in the heat transfer path 170, the heat medium in the heat transfer path 170 is heated as receiving heat while passing through the waste heat recovery heat exchanger 130 during the operation of the heat medium circulation pump 172, illustrated in FIG 4, and streams into the hot water supply heat exchanger 70 as passing through the water boil/ radiant heat exchanger bypassing valve 184.

The heat medium flown into the hot water supply heat exchanger 70 heats the hot water supply heat exchanger as transferring heat to the hot water supply heat exchanger 70, and passes through or bypasses the radiant heat exchanger 160 in accordance with the temperature condition and etc of the system.

The heat medium passed through or bypassed the radiant heat exchanger 160 bypasses the supply heat exchanger 68 after passing through the supply heat exchanger bypassing valve 204, and circulated through the waste heat recovery heat exchanger 130.

That is, the water boiling capacity of the hot water supply heat exchanger 70 of the co-generation is improved as the heat of the waste heat recovery heat exchanger 130 is transferred to the water heat exchanger 70 through the heat transfer path 170.

Reference will now be made in detail to the case not passing the refrigerant to the outdoor heat exchanger 60 as well as operating the heat pump type air conditioner 50 to be the air warming mode and controlling the heat medium in the heat transfer path 170 to be circulated through the waste heat recovery heat exchanger 130, hot water supply heat exchanger 70, and the supply heat exchanger 68.

The heat pump type air conditioner 50 controls the 4-way valve 54 to be the air warming mode as well as operating the compressor 52, and opening the outdoor heat exchanger bypassing valve 65 as well as shutting the outdoor heat exchanger bypassing valve 64 and the connection path opening and shutting valve 67.

As describing the flowing of the refrigerant of the heat pump type air conditioner 50, the high-temperature and high-pressure refrigerant compressed at the compressor 52 is transferred to the indoor machine I as passing through the 4-way valve, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and bypasses the outdoor heat exchanger 60.

The refrigerant bypassed the outdoor heat exchanger 60 is evaporated as receiving heat from the supply heat exchanger 68 while passing through the supply heat exchanger 68, and is circulated to the compressor after passing through the 4-way valve 54.

That is, the refrigerant 50 of the heat pump type air conditioner 50 is condensed at the indoor heat exchanger 56, and is warming the indoor air as evaporated at the supply heat exchanger 68.

The control unit 210 controls the water boil/ radiant heat exchanger bypassing valve 184 to be water boil/ radiant heat exchanger supply mode as well as operating the heat medium circulation pump 172 for the heat medium in the heat transfer path 170 to be circulated through the waste heat recovery heat exchanger 130, hot water supply heat exchanger 70, and the supply heat exchanger 68, and controls the supply heat exchanger bypassing valve 204 to be the supply heat exchanger supply mode.

As the control unit 210 controls the radiant heat exchanger bypassing valve 194 in accordance with the temperature of the heat medium, it controls the radiant heat exchanger bypassing valve 194 to be the radiant heat exchanger supply mode when the temperature of the heat medium is over the set point, and it controls the radiant heat exchanger bypassing valve 194 to be bypassing mode when the temperature of the heat medium is not more than the set point.

As describing the flowing of the heat medium in the heat transfer path 170, the heat medium in the heat transfer path 170 is heated as receiving heat while passing through the waste heat recovery heat exchanger 130 during the operation of the heat medium circulation pump 172, illustrated in FIG. 5, and it streams into the hot water supply heat exchanger 70 after passing through the water/ radiant heat exchanger bypassing valve 184.

The heat medium flown into the water boil hea0t exchanger 70 heats the hot water supply heat exchanger 70 as transferring heat, and passes through or by passes the radiant heat exchanger 160 in accordance with the temperature condition of the system.

The heat medium passed through or bypassed the radiant heat exchanger 160 is supplied to the supply heat exchanger 68 through the supply heat exchanger bypassing valve 204, evaporates the refrigerant as heating the refrigerant passing through the supply heat exchanger 68, and is circulated to the waste heat recovery heat exchanger 130.

That is, the hot water supply efficiency of the water heat exchanger 70 of the co-generation is improved as the heat of the waste heat recovery heat exchanger 130 is transferred to the hot water supply heat exchanger 70 through the heat transfer path 170, and the frosting g and the following problem, reducing of the air warming capacity may be generated when the refrigerant passes through the outdoor heat exchanger 60 are prevented as the supply heat exchanger 68 can stop passing the refrigerant through the outdoor heat exchanger as operating as a evaporator.

The co-generation controls the refrigerant no to pass through the outdoor heat exchanger 60 as well as operating the heat pump type air conditioner 50 to be the air warming mode, and controls the heat medium in the heat transfer path 170 not to be circulated through the waste heat recovery heat exchanger 130, supply heat exchanger 68, and the hot water supply heat exchanger 70 when the heat pump type air conditioner 50 is under the air warming mode without water boiling request, illustrated in FIG. 6.

The heat pump type air conditioner 50 controls the 4-way valve 54 to be the air warming mode as well as operating the compressor 52 and opens the outdoor heat exchanger bypassing valve 65 as well as shutting the outdoor heat exchanger outlet valve 64 and the connection path opening and shutting valve 67.

As describing the flowing of the refrigerant in the heat pump type air conditioner 50, the high-temperature and high-pressure refrigerant compressed at the compressor 52 is transferred to the indoor machine as passing through the 4-way valve 54, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and bypasses the outdoor heat exchanger 60.

The refrigerant bypassed the outdoor heat exchanger 60 is evaporated while passing through the supply heat exchanger 68, and circulated to the compressor 52 as passing through the 4-way valve 54.

That is, the refrigerant of the heat pump type air conditioner 50 warms the indoor air as condensed at the indoor heat exchanger 56 and evaporated at the supply heat exchanger 68.

The control unit 210 operates the heat medium circulation pump 172 for the heat medium in the heat transfer path 170 to be circulated through the waste heat recovery heat exchanger 130 and the supply heat exchanger 68, and controls the hot water supply/ radiant heat exchanger bypassing valve 184 to be hot water supply/ radiant heat exchanger bypassing mode for the heat medium not to pass through the hot water supply heat exchanger 70.

As describing the flowing of the heat medium of the heat transfer path 170, during the operation of heat medium circulation pump 172, as illustrated in FIG. 6, the heat medium in the heat transfer path 170 is heated as receiving heat while passing through the waste heat recovery heat exchanger 130, then, bypasses the hot water supply heat exchanger 70 the radiant heat exchanger 160, and stream into the supply heat exchanger 68.

The heat medium flown into the supply heat exchanger 68 evaporates the refrigerant as heating the refrigerant passing through the supply heat exchanger 68, and is circulated to the waste heat recovery heat exchanger 130.

That is, the heat of the waste heat recovery heat exchanger 130 of the co-generation having the water boil function is not transferred to the hot water supply heat exchanger 70, but is centralized to the supply heat exchanger 68, and the consumption electricity of the compressor 52 is reduced as the pressure is risen with the evaporation of the refrigerant of the heat pump type air-conditioner 50 at the supply heat exchanger 68.

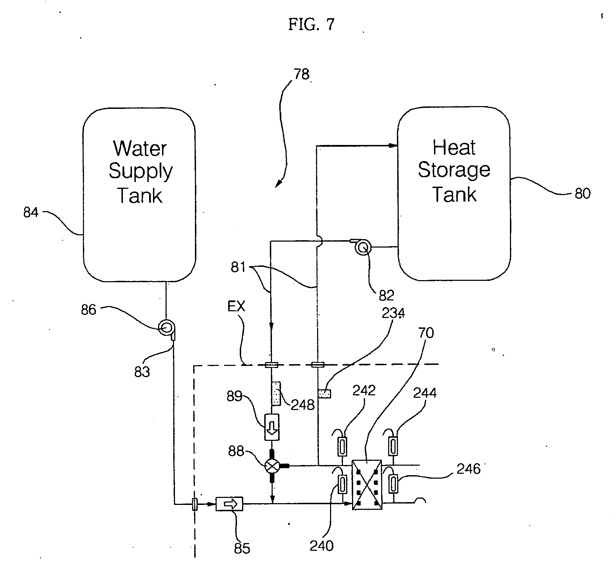

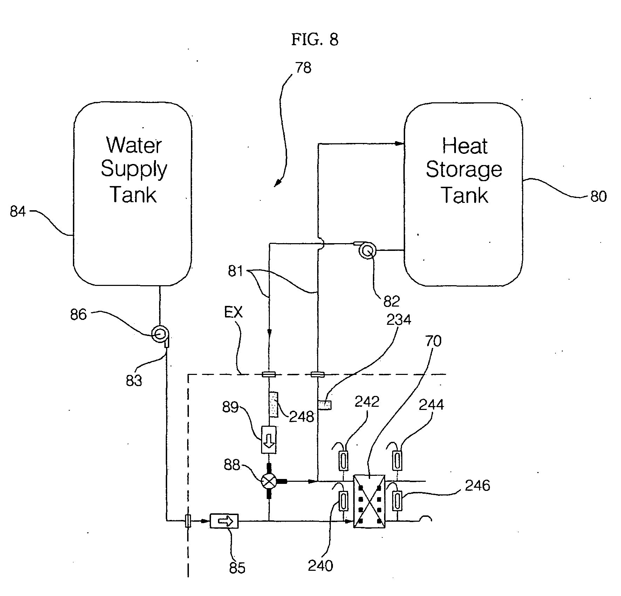

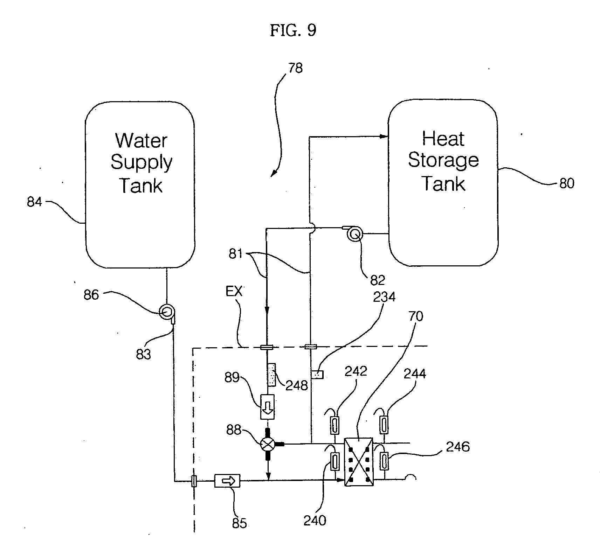

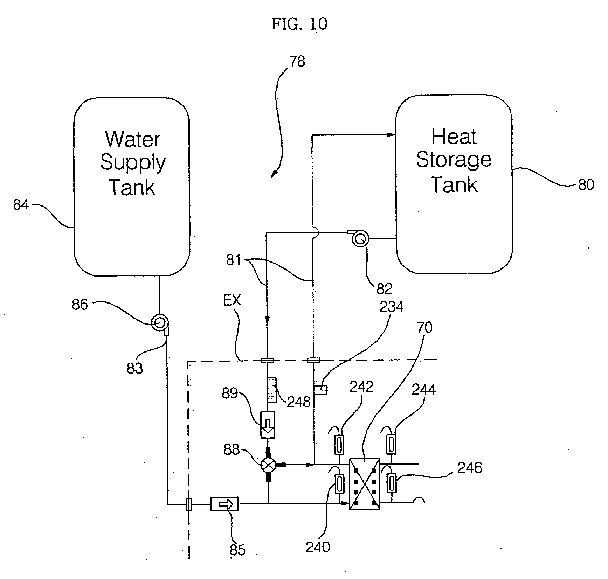

FIG. 7 is a magnified view of the water boil unit of an embodiment of the co-generation according to the present invention under the water supply and heat accumulation water boil mode, FIG. 8 is a magnified view of the water boil unit of an embodiment of the co-generation according to the present invention under the water supply and water boil mode, FIG. 9 is a magnified view of the water boil unit of an embodiment of the co-generation according to the present invention under the heat accumulation mode, and FIG. 10 is a magnified view of the water boil unit of an embodiment of the co-generation according to the present invention under the circulation mode.

The co-generation, as illustrated in FIGS 7 to 10, comprises a water boil recovery inlet temperature sensor 240 composed of a RTD sensor and a temperature sensor gauging the temperature of the water streaming into the hot water supply heat exchanger 70; a water boil recovery outlet temperature sensor 242 composed of a RTD sensor and a temperature sensor gauging the temperature of the water discharged from the hot water supply heat exchanger; a water boil inlet temperature sensor 244 composed of a RTD sensor and a temperature sensor gauging the temperature of the heat medium streaming into the hot water supply heat exchanger 70; and a water boil outlet temperature sensor composed of a RTD sensor and a temperature sensor gauging the temperature of the heat medium discharged from the hot water supply heat exchanger.

The co-generation further comprises a hot water storage tank temperature sensor 248 composed of a thermistor gauging the temperature of the water supplied to the water circulation path 82 from the hot water storage tank 80.

Here, the water circulation path flowmeter 234, water boil recovery inlet temperature sensor 240, water boil recovery outlet temperature sensor 242, the water boil inlet temperature sensor 244, the water boil outlet temperature sensor 246, and the hot water storage tank temperature sensor 248 are installed at the radiant unit EX.

The control unit 210 of the co-generation controls the water supply pump 86 a water supply apparatus, the hot water storage tank pump 82 a water supply apparatus of the hot water storage tank, and the hot water supply heat exchanger bypassing valve 88 in accordance with the temperature perceived at the water boil recovery inlet temperature sensor 240, water boil inlet temperature sensor 244, and the hot water storage tank temperature sensor 248.

The control unit 210 controls the water boil unit 78 to be the water supply and heat store water boil mode circulating the water in the hot water storage tank 80 as supplying the water in the water supply tank 84 without connection with the air-cooling/ air heating operation as illustrated in FIG. 7 when the temperature of the hot water storage tank 80 is the first set point more than the temperature of the water boil recovery inlet with a water boiling request and the temperature of the water boil inlet is the second set point more than the temperature of the hot water storage tank.

Here, the first set point is as a set temperature deciding the cold water supplying by the water supply pump 86, it will be described to be set 1 degree C on the following for the convenience of description, and the second set point is as a set temperature deciding the heat storing of the hot water storage tank 80, it will be described to be set 3 degree C on the following for the convenience of description.

The control unit 210 controls the hot water supply heat exchanger bypassing valve 88 to be the heat exchanger supply mode as well as operating the water supply pump and the hot water storage pump 82.

The water in the hot water storage tank 80 is supplied to the water circulation path 81 by the hot water storage tank pump 82, streams into the hot water supply heat exchanger 70 after passing through the hot water supply heat exchanger bypassing valve 88, is heated as taking heat from the heat medium while passing through the hot water supply heat exchanger 80, and then, is circulated into the hot water storage tank 80 through the water circulation path 81.

The water 84 in the water supply tank is supplied to the water supply path and supplied to the water circulation path 81 by the water supply pump 86, streams into the hot water supply heat exchanger 70 as mixed with the hot water supplied to the water circulation path from the hot water storage tank 80, and is supplied to the hot water storage tank 80 through the water circulation path 81 after heated as taking heat from the hot water supply heat exchanger 80.

At this time, the hot water supply heat exchanger 70 heats not only the cold water supplied from the water supply tank 84 supplied the heat medium recovered heat of the waste heat recovery heat exchanger 130, but also the hot water circulated from the hot water storage tank 80, and the water boil unit 78 boils water in record time.
The temperature decent scale of the heat medium passing through the hot water supply heat exchanger 70 is large as heat exchanged with the cold water and the hot water of the hot water storage tank 80 has a lower temperature compared with the temperature of the water boil inlet as well and the heat medium passing through the hot water supply heat exchanger 70 heats as taking much heat of the refrigerant passing through the supply heat exchanger 68 while passing through the supply heat exchanger 68, and it transfers much heat with cold water while passing the hot water supply heat exchanger 70 again.

On the other hand, the control unit 210 controls the water boil unit 78 to be the water supply and boil mode circulating the water in the hot water storage tank 80 to be bypassed the hot water supply heat exchanger 70 as supplying the water in the water supply tank 84, as illustrated in FIG. 8 without any consequence of the air-cooling/ air heating operation when the temperature of the hot water storage tank 80 is the first set point more than the temperature of the water boil recovery inlet temperature and has a water boiling request, and the temperature of the water boil inlet is not the second set point more than the temperature of the hot water storage tank.

The control unit 210 controls the hot water supply heat exchanger bypassing valve 88 to be the hot water supply heat exchanger bypassing mode as well as operating the water supply pump 86 and the hot water storage tank pump 82.

The water in the hot water storage tank 80 is supplied to the water circulation path 81 by the hot water storage tank pump 82, bypasses the hot water supply heat exchanger 70 as passing through the hot water supply heat exchanger bypassing valve 88, and is circulated into the hot water storage tank 80 through the water circulation path 81.

The water in the water supply tank 84 is supplied to the water circulation path 81after supplied to the water supply path 83 by the water supply pump 86, heated with heat taken from the hot water supply heat exchanger 80 after streaming into the hot water supply heat exchanger 70, and supplied to the hot water storage tank 80 as mixed with the hot water circulated through the water circulation path 81.

In the hot water supply heat exchanger 70, the heat medium recovered the heat of the waste heat recovery heat exchanger 130 is not heat exchanged directly with the hot water has a big temperature variation compared with the water boil inlet, but heats only cold water supplied from the water supply tank 84, and the water supply unit 78 boils water in record time.

As the heat medium passed through the hot water supply heat exchanger 70 is heat exchanged with the cold water, the decent of temperature of the heat medium is high, heated as taking much heat from the refrigerant passing through the supply heat exchanger while passing the supply heat exchanger 68, and transfers much heat with cold water while passing the hot water supply heat exchanger 70 again.

When the water boiling is required, the control unit 210 controls the water-boiling unit to be the heat-storing mode that the cold water in the water supply tank 84 is not supplied/ heated and only the water in the hot water storing tank 80 is circulated through the hot water supply heat exchanger 70, as illustrated In fig. 9, without consequence of the air-cooling/ air-warming operation when the temperature of the hot water storage tank is not the first set point more than the temperature of the water boil recovery inlet, and the temperature of the water boil inlet is the second set point more than the temperature of the hot water storage tank.

The control unit 210 stops operating the water supply pump 86, and controls the hot water supply heat exchanger bypassing valve 88 to be the hot water supply heat exchanger supply mode as well as operating the hot water storage pump 82.

The water in the hot water storage tank 80 is supplied to the water circulation path 81 by the hot water storage pump 82, streams into the hot water supply heat exchanger 70 after passing through the hot water supply heat exchanger bypassing valve 88, and is circulated into the hot water storage tank 80 through the water circulation path 81 after taking the heat of the heat medium while passing through the hot water supply heat exchanger 70.

The water boil unit 78 does not supply the water because the temperature of the hot water storage tank is not the first set point more than the temperature of the water boil recovery inlet, and only heat the water in the hot water storage tank 70 rapidly as the temperature of the water boil inlet is the second set point more than the temperature of the hot water storage tank.

In the hot water supply heat exchanger 70, the heat medium recovered heat from the waste heat recovery heat exchanger 130 is heat exchanged with the hot water in the hot water storage tank 80 having lower temperature than the heat medium passing through the hot water supply heat exchanger 70, and the water supply unit boils water rapidly as fast as it can.

The heat medium passed through the hot water supply heat exchanger 70 supply heat with the hot water supplied from the hot eater storage tank 80, is heated with the heat taken from the refrigerant passing through the supply heat exchanger 68 while passing through the supply heat exchanger 68, and then, transfers heat with the hot water while passing through the hot water supply heat exchanger 70 again.

When the water boiling is required, and when the temperature of the hot water storage tank is not the first set point more than the temperature of the water boil recovery inlet and the temperature of the water boil inlet is not the second set point more than the temperature of the hot water storage tank, the control unit 210 controls the water boil unit 78 to be the circulation mode not supplying/heating the water in the water supply tank 84 and bypassing the water in the hot water storage tank 80 through the hot water supply heat exchanger 70 without consequence of the air-cooling/ air heating operation as illustrated in FIG. 10.

The control unit 210 stops operating the water supply pump 86 and controls the hot water supply heat exchanger bypassing valve 88 to be the hot water supply heat exchanger bypassing mode as well as operating the hot water storage pump 82.

The water in the hot water storage tank 80 is supplied to the water circulation path 81 by the hot water storage pump 82 and bypasses the hot water supply heat exchanger 70 as passing through the hot water supply heat exchanger bypassing valve 88, and is circulated into the hot water storage tank 80 through the water circulation path 81.

That is, the water boil unit 78 doesn't to the water supplying as the temperature of the hot water storage tank is not the first set point more than the temperature of the water boil recovery inlet, and only circulates the water in the hot water storage tank 70 as the temperature of the water boil inlet is not the second set point more than the temperature of the hot water storage tank.

In the hot water supply heat exchanger 70, the heat medium recovered the heat of the waste heat recovery heat exchanger 130 is not heat exchanged with the cold water or hot water of the water boil unit 78, but just supplied to the supply heat exchanger 68.

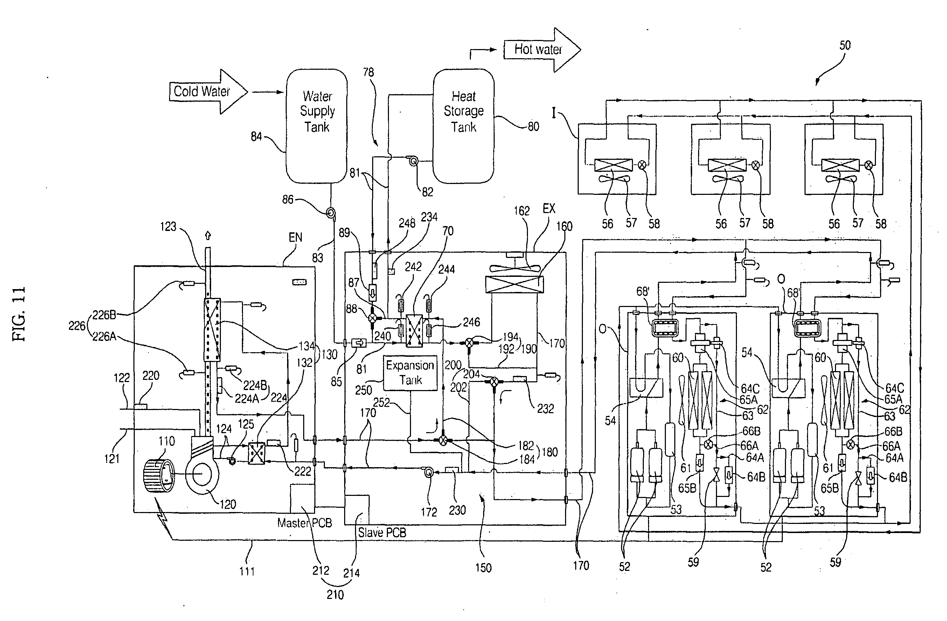

FIG. 11 is a block diagram of another embodiment of the co-generation according to the present invention.

The supply heat exchanger 68' of the co-generation according to the present embodiment is installed in the inside of the outdoor machine O, and the same referential marks are used as other compositions are the same or similar to the co-generation according to an embodiment of the present invention and the detailed description on it is omitted.

A part of the heat transfer path 170 connected with the supply heat exchanger 68' is arranged as passing through the outdoor machine O.

On the other hand, the present invention isn't limited to the above-mentioned embodiment, and it is possible to be comprised with the hot water supply heat exchanger 70, the hot water supply heat exchanger bypassing apparatus, the supply heat exchanger 68, and the supply heat exchanger bypassing apparatus 200 without the exhaust gas heat exchanger 160 and the exhaust gas heat exchanger bypassing apparatus 190, and it is possible for the engine unit EN and the heat radiant unit EX to be composed in a single composition, and various embodiments are possible in the scope the present invention as defined in the claims.

Reference will now be made in detail as for the effects of the co-generation and the control method of the same of the present invention configured as above.

The co-generation and the control method of the same according to the present invention has an advantage in that the effective water boil heat is increased as supplying the cold water supplied from the water service and the hot water supplied from the hot water storage tank to the hot water supply heat exchanger properly and heat exchanging with the heat medium such as an anti freezing solution and etc passing through the hot water supply heat exchanger.

Moreover, the co-generation and the control method of the same according to the present invention has an advantage in that the consumption electricity of the compressor is reduced as lowering the condensing pressure by increasing the heat exchanging when the heat medium condenses the refrigerant in the supply heat exchanger during the air-cooling operation.

Furthermore, the co-generation and the control method of the same according to the present invention has an advantage in that the amount of water boiling heat is increased as the heat medium taken heat from the refrigerant in the supply heat exchanger is supplied to the hot water supply heat exchanger and used for water boiling again.

## Claims

1. A co-generation comprising:
an electric generator (110);
a drive source (120) operating the electric generator;
an air conditioner (50) air-conditioning indoor air;
a hot water supply heat exchanger (70) heating water;
a heat transfer path (170) connected with the hot water supply heat exchanger (70) to transfer heat;
a waste heat recovery heat exchanger (130) recovering the waste heat of the drive source (120) and connected with the heat transfer path (170);
a hot water storage tank (80) connected with the hot water supply heat exchanger (70) and a water circulation path (81); and
a hot water storage water supply apparatus (82) supplying water in the hot water storage tank (80) to the water circulation path (81);
**characterized by**
a water supply path (83) connected with the water circulation path (81); and
a water supply apparatus (86) supplying water to the water supply path (83); and **characterized in that**
a hot water supply heat exchanger bypassing apparatus (87, 88) is installed to bypass the water supplied to the water circulation path (81) from the hot water storage tank (80) through the hot water supply heat exchanger (70), and **in that** a supply heat exchanger (68) installed on the refrigerant path of the air conditioner (50) and connected with the heat transfer path (170).

2. The co-generation according to claim 1,
wherein the air conditioner (50) is a heat pump type air conditioner including a compressor (52), a 4-way valve (54), an outdoor heat exchanger (60), an expansion apparatus (58) and (59), and an indoor heat exchanger (56).

3. The co-generation according to claim 2,
wherein the heat pump type air conditioner further includes an outdoor heat exchanger bypassing apparatus (62) bypassing the refrigerant through the outdoor heat exchanger.

4. The co-generation according to claim 2,
wherein the supply heat exchanger (68) is installed on the refrigerant path of between the 4-way valve (54) and the outdoor heat exchanger (60).

5. The co-generation according to claim 1,
wherein the co-generation further comprises radiant heat exchanger (160) radiating heat to outside as installed between the water heat exchanger (70) and supply heat exchanger (68) in the heat transfer path (170).

6. The co-generation according to claim 5,
wherein the co-generation further comprises a hot water supply/ radiant heat exchanger bypassing apparatus (180) bypassing the heat of the waste heat recovery heat exchanger (130) through the hot water supply heat exchanger (70) and radiant heat exchanger (160);
a radiant heat exchanger bypassing apparatus (190) bypassing the heat of the waste heat recovery heat exchanger (130) through the radiant heat exchanger (160); and
a supply heat exchanger bypassing apparatus (200) bypassing the heat of the exhaust gas heat exchanger (130) through the supply heat exchanger (68).

7. The co-generation according to any of claims 1 to 6,
wherein the water supply path (83) is connected with the water supply tank.

8. The co-generation according to claim 1 or 3,
wherein the hot water supply heat exchanger bypassing apparatus (87) and (88) includes a hot water supply heat exchanger bypassing path (87) formed on the water circulation path (81); and
a hot water supply heat exchanger bypassing valve (88) controlling the water circulation path (81) and the hot water supply heat exchanger bypassing path (87).

9. The co-generation according to claim 8,
wherein the co-generation further comprises a hot water storage temperature sensor (248) gauging the temperature of the water supplied to the water circulation path (81) from the hot water storage tank (80);
a water boil recovery inlet temperature sensor (240) gauging the temperature of the water streaming into the hot water supply heat exchanger (70);
a water boil inlet temperature sensor (244) gauging the temperature of the heat streaming into the hot water supply heat exchanger (70) through the heat transfer path (170); and
a control unit controlling the water supply apparatus (86), the hot water storage tank water supply apparatus (82), and the hot water supply heat exchanger bypassing valve (88) in accordance with the perceived temperature of the hot water storage tank temperature sensor (248), the water boil recovery inlet temperature sensor (240), and the water boil inlet temperature sensor (244).

10. The control method of the co-generation according to claim 9,
wherein the co-generation operates the water supply apparatus (86) and the hot water storage tank water supply apparatus (82) and controls the hot water supply heat exchanger bypassing valve (88) to be the hot water supply heat exchanger supply mode when the temperature of the hot water storage tank (80) is the first set point more than the temperature of the water boil recovery inlet and the temperature of the water boil inlet is the second set point more than the temperature of the hot water storage tank.

11. The control method of the co-generation according to claim 9,
wherein the co-generation operates the water supply apparatus (86) and the hot water storage tank water supply apparatus (82) and controls the hot water supply heat exchanger bypassing valve (88) to be the hot water supply heat exchanger bypassing mode when the temperature of the hot water storage tank (80) is the first set point more than the temperature of the water boil recovery inlet and the temperature of the water boil inlet is not the second set point more than the temperature of the hot water storage tank.

12. The control method of the co-generation according to claim 9,
wherein the co-generation operates the hot water storage tank water supply apparatus (86) as well as stopping the operation of the water supply apparatus (82), and controls the hot water supply heat exchanger bypassing valve to be the hot water supply heat exchanger supply mode when the temperature of the hot water storage tank (80) is not the first set point more than the temperature of the water boil recovery inlet and the temperature of the water boil inlet is the second set point more than the temperature of the hot water storage tank.

13. The control method of the co-generation according to claim 9,
wherein the co-generation operates the hot water storage tank water supply apparatus (86) as well as stopping the operation of the water supply apparatus (82), and controls the hot water supply heat exchanger bypassing valve to be the hot water supply heat exchanger bypassing mode when the temperature of the hot water storage (80) is not the first set point more than the temperature of the water boil recovery inlet and the temperature of the water boil inlet is not the second set point more than the temperature of the hot water storage tank.

## Patentansprüche

1. Blockheizung, die aufweist:
einen elektrischen Generator (110);
eine Antriebsquelle (120), die den elektrischen Generator betreibt;
eine Klimaanlage (50), die Innenluft klimatisiert;
einen Heißwasserversorgungs-Wärmetauscher (70), der Wasser heizt;
einen Wärmeübertragungsweg (170), der mit dem Heißwasserversorgungs-Wärmetauscher (70) verbunden ist, um Wärme zu übertragen;
einen Abwärmerückgewinnungs-Wärmetauscher (130), der die Abwärme der Antriebsquelle (120) zurückgewinnt und mit dem Wärmeübertragungsweg (170) verbunden ist;
einen Heißwasserspeichertank (80), der mit dem Heißwasserversorgungs-Wärmetauscher (70) und einem Wasserzirkulationsweg (81) verbunden ist; und
eine Heißwasserspeicher-Wasserversorgungsvorrichtung (82), die Wasser in dem Heißwasserspeichertank (80) an den Wasserzirkulationsweg (81) liefert;
**gekennzeichnet durch**
einen Wasserversorgungsweg (83), der mit dem Wasserzirkulationsweg (81) verbunden ist; und
eine Wasserversorgungsvorrichtung (86), die Wasser an den Wasserversorgungsweg (83) liefert; und **dadurch gekennzeichnet, dass**
eine Heißwasserversorgungs-Wärmetauscher-Umleitungsvorrichtung (87, 88) installiert ist, um das von dem Heißwasserspeichertank (80) an den Wasserzirkulationsweg (81) gelieferte Wasser **durch** den Heißwasserversorgungs-Wärmetauscher (70) umzuleiten; und **dadurch**, dass
ein Versorgungswärmetauscher (68) auf dem Kältemittelweg der Klimaanlage (50) installiert ist und mit dem Wärmeübertragungsweg (170) verbunden ist.

2. Blockheizung nach Anspruch 1,
wobei die Klimaanlage (50) eine Wärmepumpen-Klimaanlage ist, die einen Kompressor (52), ein 4-Wege-Ventil (54), einen Außenwärmetauscher (60), eine Expansionsvorrichtung (58) und (59) und einen Innenwärmetauscher (56) umfasst.

3. Blockheizung nach Anspruch 2,
wobei die Wärmepumpen-Klimaanlage ferner eine Außenwärmetauscher-Umleitungsvorrichtung (62) umfasst, die Kältemittel durch den Außenwärmetauscher umleitet.

4. Blockheizung nach Anspruch 2,
wobei der Versorgungswärmetauscher (68) auf dem Kältemittelweg zwischen dem 4-Wege-Ventil (54) und dem Außenwärmetauscher (60) installiert ist.

5. Blockheizung nach Anspruch 1,
wobei die Blockheizung ferner einen Strahlungswärmetauscher (160) umfasst, der Wärme nach außen abstrahlt, wenn er zwischen dem Wasserwärmetauscher (70) und dem Versorgungswärmetauscher (68) in dem Wärmeübertragungsweg (170) installiert ist.

6. Blockheizung nach Anspruch 5,
wobei die Blockheizung ferner eine Heißwasserversorgungs-/Strahlungswärmetauscher-Umleitungsvorrichtung (180) aufweist, welche die Wärme des Abwärmerückgewinnungs-Wärmetauschers (130) durch den Heißwasser-Versorgungswärmetauscher (70) und den Strahlungswärmetauscher (160) umleitet;
eine Strahlungswärmetauscher-Umleitungsvorrichtung (190), welche die Wärme des Abwärmerückgewinnungs-Wärmetauschers (130) durch den Strahlungswärmetauscher (160) umleitet; und
eine Versorgungswärmetauscher-Umleitungsvorrichtung (200), welche die Wärme des Abgaswärmetauschers (130) durch den Versorgungswärmetauscher (68) umleitet.

7. Blockheizung nach einem der Ansprüche 1 bis 6, wobei der Wasserversorgungsweg (83) mit dem Wasserversorgungstank verbunden ist.

8. Blockheizung nach Anspruch 1 oder 3,
wobei die Heißwasserversorgungs-Wärmetauscher-Umleitungsvorrichtung (87) und (88) einen Heißwasserversorgungs-Wärmetauscher-Umleitungsweg (87) umfasst, der auf dem Wasserzirkulationsweg (81) ausgebildet ist; und
ein Heißwasserversorgungs-Wärmetauscher-Umleitungsventil (88), das den Wasserzirkulationsweg (81) und den Heißwasserversorgungs-Wärmetauscher-Umleitungsweg (87) steuert.

9. Blockheizung nach Anspruch 8,
wobei die Blockheizung ferner einen Heißwasserspeicher-Temperatursensor (248) aufweist, der die Temperatur des Wassers misst, das von dem Heißwasserspeichertank (80) an den Wasserzirkulationsweg (81) geliefert wird;
einen Siedewasser-Rückgewinnungs-Einlasstemperatursensor (240), der die Temperatur des Wassers misst, das in den Heißwasserversorgungs-Wärmetauscher (70) strömt;
einen Siedewasser-Einlasstemperatursensor (244), der die Temperatur der Wärme misst, die durch den Wärmeübertragungsweg (170) in den Heißwasserversorgungs-Wärmetauscher (70) strömt; und
eine Steuereinheit, welche die Wasserversorgungsvorrichtung (86), die Heißwasserspeichertank-Versorgungsvorrichtung (82) und das Heißwasserversorgungs-Wärmetauscher-Umleitungsventil (88) gemäß der erkannten Temperatur des Heißwasserspeichertank-Temperatursensors (248), des Siedewasser-Rückgewinnungs-Einlasstemperatursensors (240) und des Siedewasser-Einlasstemperatursensors (244) steuert.

10. Steuerverfahren der Blockheizung gemäß Anspruch 9,
wobei die Blockheizung die Wasserversorgungsvorrichtung (86) und die Heißwasserspeichertank-Wasserversorgungsvorrichtung (82) betreibt und das Heißwasserversorgungs-Wärmetauscher-Umleitungsventil (88) auf die Heißwasserversorgungs-Wärmetauscher-Versorgungsbetriebsart steuert, wenn die Temperatur des Heißwasserspeichertanks (80) der erste Sollwert über der Temperatur des Siedewasser-Rückgewinnungseinlasses ist und die Temperatur des Siedewassereinlasses der zweite Sollwert über der Temperatur des Heißwasserspeichertanks ist.

11. Steuerverfahren der Blockheizung gemäß Anspruch 9,
wobei die Blockheizung die Wasserversorgungsvorrichtung (86) und die Heißwasserspeichertank-Wasserversorgungsvorrichtung (82) betreibt und das Heißwasserversorgungs-Wärmetauscher-Umleitungsventil (88) auf die Heißwasserversorgungs-Wärmetauscher-Umleitungsbetriebsart steuert, wenn die Temperatur des Heißwasserspeichertanks (80) der erste Sollwert ist, der höher als die Temperatur des Siedewasser-Rückgewinnungseinlasses ist und die Temperatur des Siedewassereinlasses nicht der zweite Sollwert ist, der höher als die Temperatur des Heißwasserspeichertanks ist.

12. Steuerverfahren der Blockheizung nach Anspruch 9,
wobei die Blockheizung die Heißwasserspeichertank-Wasserversorgungsvorrichtung (86) betreibt ebenso wie sie den Betrieb der Wasserversorgungsvorrichtung (82) stoppt, und das Heißwasserversorgungs-Wärmetauscher-Umleitungsventil auf die Heißwasserversorgungs-Wärmetauscherversorgungsbetriebsart steuert, wenn die Temperatur des Heißwasserspeichertanks (80) nicht der erste Sollwert ist, der höher als die Temperatur des Siedewasser-Rückgewinnungseinlasses ist, und die Temperatur des Siedewassereinlasses der zweite Sollwert ist, der höher als die Temperatur des Heißwasserspeichertanks ist.

13. Steuerverfahren der Blockheizung gemäß Anspruch 9,
wobei die Blockheizung die Heißwasserspeichertank-Wasserversorgungsvorrichtung (86) betreibt ebenso wie sie den Betrieb der Wasserversorgungsvorrichtung (82) stoppt, und das Heißwasserversorgungs-Wärmetauscher-Umleitungsventil auf die Heißwasserversorgungs-Wärmetauscher-Umleitungsbetriebsart steuert, wenn die Temperatur des Heißwasserspeichers (80) nicht der erste Sollwert ist, der höher als die Temperatur des Siedewasser-Rückgewinnungseinlasses ist, und die Temperatur des Siedewassereinlasses nicht der zweite Sollwert ist, der höher als die Temperatur des Heißwasserspeichertanks ist.

## Revendications

1. Système de cogénération comprenant :
un générateur électrique (110) ;
une source d'entraînement (120) faisant fonctionner le générateur électrique ;
un climatiseur (50) climatisant l'air intérieur ;
un échangeur thermique d'alimentation d'eau chaude (70) chauffant de l'eau ;
un chemin de transfert de chaleur (170) relié à l'échangeur thermique d'alimentation d'eau chaude (70) pour transférer de la chaleur ;
un échangeur thermique de récupération de chaleur résiduelle (130) récupérant la chaleur résiduelle de la source d'entraînement (120) et relié au chemin de transfert de chaleur (170) ;
un réservoir de stockage d'eau chaude (80) relié à l'échangeur thermique d'alimentation d'eau chaude (70) et à un chemin de circulation d'eau (81) ; et
un appareil d'alimentation d'eau de stockage d'eau chaude (82) fournissant de l'eau dans le réservoir de stockage d'eau chaude (80) au chemin de circulation d'eau (81) ;
**caractérisé par**
un chemin d'alimentation d'eau (83) relié au chemin de circulation d'eau (81) ; et
un appareil d'alimentation d'eau (86) fournissant de l'eau au chemin d'alimentation d'eau (83) ; et **caractérisé en ce que**
un appareil de dérivation d'échangeur thermique d'alimentation d'eau chaude (87, 88) est installé pour dériver l'eau fournie au chemin de circulation d'eau (81) en provenance du réservoir de stockage d'eau chaude (80) à travers l'échangeur thermique d'alimentation d'eau chaude (70) ; et **en ce que**
un échangeur thermique d'alimentation (68) est installé sur le chemin de réfrigérant du climatiseur (50) et relié au chemin de transfert de chaleur (170).

2. Système de cogénération selon la revendication 1,
dans lequel le climatiseur (50) est un climatiseur de type à pompe de chaleur comprenant un compresseur (52), une vanne à quatre voies (54), un échangeur thermique extérieur (60), un appareil d'expansion (58) et (59), et un échangeur thermique intérieur (56).

3. Système de cogénération selon la revendication 2,
dans lequel le climatiseur de type à pompe de chaleur comprend en outre un appareil de dérivation d'échangeur thermique extérieur (62) dérivant le réfrigérant à travers l'échangeur thermique extérieur.

4. Système de cogénération selon la revendication 2,
dans lequel l'échangeur thermique d'alimentation (68) est installé sur le chemin de réfrigérant entre la vanne à quatre voies (54) et l'échangeur thermique extérieur (60).

5. Système de cogénération selon la revendication 1,
dans lequel le système de cogénération comprend en outre un échangeur thermique rayonnant (160) rayonnant de la chaleur vers l'extérieur en étant installé entre l'échangeur thermique d'eau (70) et l'échangeur thermique d'alimentation (68) dans le chemin de transfert de chaleur (170).

6. Système de cogénération selon la revendication 5,
dans lequel le système de cogénération comprend en outre un appareil de dérivation d'échangeur thermique d'alimentation d'eau chaude/d'échangeur thermique rayonnant (180) dérivant la chaleur de l'échangeur thermique de récupération de chaleur résiduelle (130) à travers l'échangeur thermique d'alimentation d'eau chaude (70) et l'échangeur thermique rayonnant (160) ;
un appareil de dérivation d'échangeur thermique rayonnant (190) dérivant la chaleur de l'échangeur thermique de récupération de chaleur résiduelle (130) à travers l'échangeur thermique rayonnant (160) ; et
un appareil de dérivation d'échangeur thermique d'alimentation (200) dérivant la chaleur de l'échangeur thermique de gaz d'échappement (130) à travers l'échangeur thermique d'alimentation (68).

7. Système de cogénération selon l'une quelconque des revendications 1 à 6,
dans lequel le chemin d'alimentation d'eau (83) est relié au réservoir d'alimentation d'eau.

8. Système de cogénération selon la revendication 1 ou 3,
dans lequel l'appareil de dérivation d'échangeur thermique d'alimentation d'eau chaude (87) et (88) comprend un chemin de dérivation d'échangeur thermique d'alimentation d'eau chaude (87) formé sur le chemin de circulation d'eau (81) ; et une vanne de dérivation d'échangeur thermique d'alimentation d'eau chaude (88) commandant le chemin de circulation d'eau (81) et le chemin de dérivation d'échangeur thermique d'alimentation d'eau chaude (87).

9. Système de cogénération selon la revendication 8,
dans lequel le système de cogénération comprend en outre un capteur de température de stockage d'eau chaude (248) jaugeant la température de l'eau fournie au chemin de circulation d'eau (81) en provenance du réservoir de stockage d'eau chaude (80) ;
un capteur de température d'entrée de récupération d'eau bouillante (240) jaugeant la température de l'eau s'écoulant dans l'échangeur thermique d'alimentation d'eau chaude (70) ;
un capteur de température d'entrée d'eau bouillante (244) jaugeant la température de la chaleur passant dans l'échangeur thermique d'alimentation d'eau chaude (70) à travers le chemin de transfert de chaleur (170) ; et
une unité de commande commandant l'appareil d'alimentation d'eau (86), l'appareil d'alimentation d'eau de réservoir de stockage d'eau chaude (82), et la vanne de dérivation d'échangeur thermique d'alimentation d'eau chaude (88) en fonction de la température perçue du capteur de température de réservoir de stockage d'eau chaude (248), du capteur de température d'entrée de récupération d'eau bouillante (240), et du capteur de température d'entrée d'eau bouillante (244).

10. Procédé de commande du système de cogénération selon la revendication 9, dans lequel le système de cogénération fait fonctionner l'appareil d'alimentation d'eau (86) et l'appareil d'alimentation d'eau de réservoir de stockage d'eau chaude (82) et commande le passage de la vanne de dérivation d'échangeur thermique d'alimentation d'eau chaude (88) dans le mode d'alimentation d'échangeur thermique d'alimentation d'eau chaude lorsque la température du réservoir de stockage d'eau chaude (80) est au premier point de consigne au-dessus de la température de l'entrée de récupération d'eau bouillante et la température de l'entrée d'eau bouillante est au deuxième point de consigne au-dessus de la température du réservoir de stockage d'eau chaude.

11. Procédé de commande du système de cogénération selon la revendication 9, dans lequel le système de cogénération fait fonctionner l'appareil d'alimentation d'eau (86) et l'appareil d'alimentation d'eau de réservoir de stockage d'eau chaude (82) et commande le passage de la vanne de dérivation d'échangeur thermique d'alimentation d'eau chaude (88) dans le mode de dérivation d'échangeur thermique d'alimentation d'eau chaude lorsque la température du réservoir de stockage d'eau chaude (80) est au premier point de consigne au-dessus de la température de l'entrée de récupération d'eau bouillante et la température de l'entrée d'eau bouillante n'est pas au deuxième point de consigne au-dessus de la température du réservoir de stockage d'eau chaude.

12. Procédé de commande du système de cogénération selon la revendication 9, dans lequel le système de cogénération fait fonctionner l'appareil d'alimentation d'eau du réservoir de stockage d'eau chaude (86) et arrête le fonctionnement de l'appareil d'alimentation d'eau (82), et commande le passage de la vanne de dérivation d'échangeur thermique d'alimentation d'eau chaude dans le mode d'alimentation d'échangeur thermique d'alimentation d'eau chaude lorsque la température du réservoir de stockage d'eau chaude (80) n'est pas au premier point de consigne au-dessus de la température de l'entrée de récupération d'eau bouillante et la température de l'entrée d'eau bouillante est au deuxième point de consigne au-dessus de la température du réservoir de stockage d'eau chaude.

13. Procédé de commande du système de cogénération selon la revendication 9, dans lequel le système de cogénération fait fonctionner l'appareil d'alimentation d'eau de réservoir de stockage d'eau chaude (86) et arrête le fonctionnement de l'appareil d'alimentation d'eau (82), et commande le passage de la vanne de dérivation d'échangeur thermique d'alimentation d'eau chaude dans le mode de dérivation d'échangeur thermique d'alimentation d'eau chaude lorsque la température du réservoir d'eau chaude (80) n'est pas au premier point de consigne au-dessus de la température de l'entrée de récupération d'eau bouillante et la température de l'entrée d'eau bouillante n'est pas au deuxième point de consigne au-dessus de la température du réservoir de stockage d'eau chaude.
